# EUROPEAN PATENT SPECIFICATION

(11) **EP 2 285 232 B1**
(45) Date of publication and mention of the grant of the patent: **25.01.2012**
(21) Application number: 09753355.8
(22) Date of filing: 29.05.2009
(51) Int. Cl.: A23J 1/14, A23J 3/34, A23K 1/18, A23L 1/20, A23L 1/211

(54) **METHOD FOR PROCESSING SOYBEANS**
VERFAHREN ZUR VERARBEITUNG VON SOJABOHNEN
PROCÉDÉ DE TRAITEMENT DE GRAINES DE SOJA

(30) Priority: 30.05.2008 BE 200800300
(43) Date of publication of application: 23.02.2011
(73) Proprietor: Danis, Naamloze Vennotschap, 8851 Ardooie (Koolskamp) (BE)
(72) Inventor: DE MUYNCK, José, B-8750 Wingene, (BE)
(74) Representative: Donné, Eddy
(86) International application number: PCT/BE2009/000029
(87) International publication number: WO 2009/143591

(56) References cited:
- EP-A1- 0 133 014
- EP-A2- 0 199 981
- FR-A- 2 634 624
- US-A- 4 376 128
- US-A1- 2002 102 329
- US-A1- 2002 132 028
- US-A1- 2004 028 774
- US-A1- 2004 058 051
- KASHYAP ET AL: "Oil extraction rates of enzymatically hydrolyzed soybeans" JOURNAL OF FOOD ENGINEERING, BARKING, ESSEX, GB, vol. 81, no. 3, 7 March 2007 (2007-03-07), pages 611-617, XP005912108 ISSN: 0260-8774 cited in the application
- DATABASE WPI Week 200420 Thomson Scientific, London, GB; AN 2004-214549 XP002511413 & WO 2004/017751 A (FUJI OIL CO LTD) 4 March 2004 (2004-03-04)

## Description

The present invention concerns a method for processing soybeans.

In particular, the invention aims at a method for transforming full fat soybeans in high-quality intermediate products and/or nutrients, particularly meant for animal feed.

Traditionally, full fat soybeans are washed first to be subsequently conditioned for hours in a humid environment so as to simplify their peeling.

Next, the beans are broken and peeled and then transformed into flocks on rollers.

These flocks are then further treated with hexane or alcohol so as to extract the oil; next they are dried, after which all residual solvent must be thoroughly removed again.

The defatted flocks are then usually processed further into soy flour, soy protein concentrate or soy protein isolate.

Different methods are applied hereby, comprising a series of processes, such as among others grinding and sieving; several temperature treatments; washing with water; extraction under isoelectric conditions; extraction with water/alcohol mixtures; processing under alkaline conditions followed by ultracentrifugation; processing of the supernatant under acid conditions; re-solubilizing of the precipitated proteins, etc.

We note in particular that such treatments usually start from defatted soybeans suspended in water, or derivatives thereof, whereby the water content is traditionally situated between 80 and 95%, and that said water must be removed again in the end.

A method for preparing a diluted, acid, protein-containing watery solution is known in this context, according to US-4 100 024 by Jens Lorenz et al. from Novo Industry A/S in Denmark, which can be used as an additive in human food to enrich low-protein nutrients, in particular carbonated beverages, marmalades and jams.

A disadvantage hereby is that a 5-20 %ww watery suspension of the soy concentrate or soy isolate in water must be taken as a basis, and that the degree of hydrolysis must not be higher than 8-15%. Otherwise, a bitter solution will be obtained which is not suitable for or undesirable for human consumption.

A microbial enzyme of B.licheniformis is preferably used as proteinase.

A further disadvantage is that the non-hydrolysed soy substrate, together with the insoluble polysaccharides of the diluted acid.solution, must be separated by means of filtration and/or centrifugation, followed by concentration by evaporation of the obtained liquid to some 16 %ww, and possibly first treatment with active carbon in order to remove coloured pollutants from the latter.

Apart from the acid environment, the low degree of hydrolysis and the low concentration of the obtained end product, the method is also disadvantageous in that it is very labour-intensive, ecologically unsound and very wasteful of energy.

Thus, in US-2004/028774 A1 of Prevost John et al. is also described a method for processing full fat soy flour in order to enzymatically de-activate the natural trypsin inhibitor without any preceding temperature treatment (toasting) and thus make the carbohydrates and proteins more digestable for human consumption.

Use is hereby made of alpha-galactosidase, followed by deactivation of said enzyme by means of pasteurization.

A disadvantage thereof is that one typically starts from a 25-30 %w/w suspension of soy flour in water, to which different enzymes such as Protamex MG, Alpha-gal 600 and Viscozyme L are added, whereby several successive pH adjustments must be carried out and the action of the enzymes typically requires several hours.

Moreover, in a final step, the used process water must be removed again, for example by means of spray-drying.

Such treatments require quite a lot of production time, and they are moreover labour-intensive, ecologically unsound and very wasteful of energy.

From the article "Oil extraction rates of enzymatically hydrolyzed soybeans" by M.C.Kashyap et al., published in the Journal of Food engineering, part 81,(2007), p. 611-617, is also known a method to process full fat soy flocks with a crude enzyme derived from A. fumigatus which moreover has a mixed activity, and this at a moisture content of 18.1 -27.9 %ww.

Next, the hydrolysed samples are dried at 104°C so as to de-activate the crude enzyme mixture (p. 613) and to further evaporate the water to less than 25 %ww.

Finally, the dried product is extracted with hexane or another appropriate solvent so as to obtain soy oil.

The oil yield from the thus treated soy product is hereby some 1.6-2% higher than with the non-treated soy flocks, and the extraction time can hereby be reduced to about half the time.

The remaining soy by-product is usually marketed as cattle feed with a low oil content whose nutritional value is not specified any further.

Apart from the fact that all the aforesaid treatments take up a lot of production time, they are moreover very labour-intensive, ecologically unsound and very wasteful of energy.

Moreover, the use of hexane (or petroleum) creates fire hazards and explosion risks, making it necessary to purchase and use expensive explosion proof installations to finally, apart from the desired soy oil, produce a by-product having less nutritional value which can only be used as cattle feed or as an admixture to cattle feed.

From US-A-4 376 128 is also known a preparation method for whole soybeans suitable for human consumption whereby they are processed with a neutralised papain containing enzyme system before being cooked so as to reduce their flatulence.

The soybeans are hereby first soaked in water for a sufficiently long time until they are entirely re-hydrated, after which the water is poured off again.

Next, cooking water is added together with the required enzyme and several flavouring additives and/or thickening agents, and the slurry is cooked to be finally flavoured further so as to be made appropriate for human consumption.

A disadvantage thereof is that prepared edible products such as bean soup or bean sauce are in this case concerned, having a reduced flatulence, as opposed to dry, high-quality nutrients for cattle breeding or other comparable branches of industry.

Such treatments for reducing the flatulence for human consumption take up a lot of the production time, and'they are moreover very labour-intensive, ecologically unsound. and very wasteful of energy.

Finally, the processing with papain of peeled, full fat soybeans so as to improve the nutritional qualities thereof, also for human consumption, is known from NL-A-7 109 953 by N.G.J.Schouten N.V.

The papain enzyme is hereby added to a suspension of 25 %ww soy flour in water, which is subsequently heated to between 95 and 100°C so as to de-activate the natural trypsine inhibitor when being cooled down to between 50 and 75°C, without any pH adjustment however.

The mixture is subsequently spray-dried, whereby a solid suitable for human consumption is obtained with a residual water content of some 9 %w.

In the best case, the nutritional value of the original soy product, strongly reduced as a result of the toasting, could hereby only be restored to about the same level as the untreated product.

A disadvantage of such treatments is that they take up a lot of production time, and moreover are very labour-intensive, ecologically unsound and very wasteful of energy.

US-2004/0058051 A1 describes a method for processing organic materials into food products by using sequential enzyme treatment steps in which the sequence glycosidase/protease is used.

The present invention aims to remedy the above-mentioned and other disadvantages by applying a method comprising the following steps:
grinding or breaking full fat soybeans, combined with adjusting the water content to maximally 35 %ww, better still to maximally 30 %ww, even better yet to maximally 25 %ww;
processing them with at least one enzyme which is capable of transforming the insoluble polysaccharides into soluble sugars;
and subsequently processing them with at least one enzyme which is capable of hydrolysing the proteins.

In a preferred embodiment, the action of the different enzymes takes place in two successive steps.

An advantage of this method is that the soybeans must not be defatted first, as a result of which they retain their maximal nutritional value, taste and colour, and can be processed in a very efficient, energy-saving and ecologically sound manner.

Moreover, less expensive and complicated installations are required for the application of the invention, and the result aimed for can be obtained in a much shorter time with less manpower.

A further major advantage is that considerably higher Protein Dipersibility Index (PDI) values are consistently obtained in relation to products made according to the present state of the art, which is translated in a considerably higher nutritional value of the end product obtained according to the invention.

A further major advantage is that the variation in temperature of the successive production steps is highly optimised, in that additional heating between several successive steps is no longer required, as the steps are programmed such and succeed one another in such a way that a following step can make optimal use of the temperature range used by the preceding one.

A further major advantage is that the physical condition of the product, in particular the reduction or granulation degree between the different mutual steps, has been optimised such that mixing and stirring can always be done very efficiently, and that physical treatments (for example adjusting the water content, control of the temperature uniformity) as well as chemical reactions (for example the enzymatic transfer or hydrolysis) can be carried out under optimal process conditions.

This offers a major process advantage, not only in that production time is gained, but also in that energy is maximally saved according to the method of the invention, with the emission of C02 and the hothouse effect being reduced, which is less harmful to the environment.

Moreover, the multiple enzymatic digestion of the full fat soybeans according to the invention guarantees a higher degree of digestibility, for example not only to calves and smaller animals, but also to fish and other animal species in general, for example also among household pets.

Another advantage is that the optimised variation in temperature and mixing conditions make it possible to maximally protect and preserve temperature-sensitive active components, which is of major importance for example when applying the product made according to the invention in protective and/or nourishing skin creams or cosmetic masks.

In a preferred embodiment, at least one enzyme is used which is capable of converting oligosaccharides, in particular verbascose, raffinose and/or stachyose into soluble sugars.

In further preferred embodiment, a more specific alpha-galactosidase is used in a first step, followed by adding papain so as to hydrolyse the proteins therewith in a second step.

In a further preferred embodiment, the papain is used in a concentration range of 40-300 TU/mg, better still of 50-250 TU/mg, even better yet of 60 to 200 TU/mg.

A pressure of 0.5 to 3 bar, better still of 0.8 to 2 bar, even better yet of 1 to 1.2 bar is preferably maintained thereby.

In a further preferred embodiment, the papain is further de-activated by exposing it to a temperature between 80 and 110°C, better still between 85° and 105°C, even better still between 90° and 100°C, for a duration of 45 to 60 minutes, better still of 30 to 45 minutes, even better of 10 to 30 minutes.

In a further preferred embodiment, the alpha-galactosidase is de-activated by exposing it to a temperature situated between 80 and 110°C, better still between 85° and 105°C, even better still between 90° and 100°C, for a duration of 45 to 60 minutes, better still of 30 to 45 minutes, even better of 10 to 30 minutes.

In order to better explain the characteristics of the invention, the following preferred embodiment of the method for processing soybeans as it is applied in practice is described by way of example only, without being limitative in any way.

According to a preferred characteristic of the invention, full fat soybeans are broken first, peeled, ground or broken in little pieces.

Next, they are moistened with hot water until a moisture content of maximally 25 %w is obtained, as opposed to the conventional processing methods whereby a suspension must be usually made containing 70-95 % water, which water must be subsequently removed again to a large extent in an expensive processing step which is wasteful of energy.

In a first processor (or in a separate part of a professor), a first enzyme in the form of alpha-galactosidase is added to the hot and moist mass according to the invention.

As a result thereof, the oligosaccharides which are hard to digest, such as for example raffinose, stachyose and verbascose, are converted into soluble sucrose compounds.

This enzyme is capable of acting on a mass having a moisture content of less than 25 %w, which is applicable in this case according to the invention, as opposed to the methods which are frequently used according to the present state of the art.

In order to make this possible, a mixer is advantageously used, and the method is preferably applied at a temperature situated between 60 and 80°C.

Once the desired conversion from the insoluble sugars into the soluble compounds has been obtained, a proteinase, in this case papain, is added in a second processor (or in a separate part of the first one).

The latter is obtained from the latex of the fruit of the Carica papaya plant, i.e. Vasconcellea cundinamarcensis, and it is a large-spectrum enzyme.

It is capable of hydrolysing peptides as well as proteins.

Said papain has a concentration of for example 60-200 TU/mg and it works best at a neutral pH.

In order to obtain this, the pH is adjusted by adding podium hydroxide or hydrochloric acid to the original moisturizing water, depending on the demands and circumstances.

The optimal temperature for this enzymatic hydrolysis is situated for example between 60 and 80°C, and it is maintained for a duration of 15 to 20 minutes at least.

The progress of the reaction can be easily followed by following the viscosity as a function of time, which diminishes as the hydrolysis progresses.

In the reactions occurring under the influence of the enzyme, in particular of papain, a proteolytic activity can be distinguished among others, whereby proteins are split into peptides and possibly into amino acids, followed by an esterase activity whereby a free carboxyl group and an alcohol group are set free from esters, and finally also an amidase activity, whereby amide bonds are split into free carboxyl groups and amines.

In practice, this mixing, macerating and enzymatic opening up of the full fat soybeans preferably takes place in a processor which has been specially designed to that end, which is equiped with a mixing gear keeping the mass continuously in motion, whose temperature can moreover be adjusted via a double wall, and which can also be put under as light overpressure of maximally 3 bar if need be.

These macerated .soybeans, enzymatically treated with alpha-galactosidase, in a preferred embodiment leave said processor to be subsequently led to a second processor in a continuous process stream, which has been provided under the first one in that case, and in which the second enzymatic processing (in particular the treatment with papain) takes place.

Said second processor may also consist of a separated zone or a compartment or a subunit of the first processor of which it forms an integral part, and thus it must not necessarily be entirely separated or provided under the first processor.

After having been subjected to this double, enzymatic treatment, the mass is exposed to a thermal treatment by heating it for a period of at least 15 to 20 minutes to 90-105°C, as a result of which the used enzymes are further de-activated.

In this way, technical enzymes with a very great effect, which can act on products with a low moisture content and which can provide an end product with a higher digestion value in a short time, are efficiently used.

In another preferred embodiment, the mass obtained by applying the enzymatic transformation of the insoluble sugars, as described in the first step, or the mass obtained by the enzymatic release of the proteins, as described in the second step, or also the mass obtained by a combination of both above-described methods, is further processed by expanding the material, such that it can be subjected to another additional thermal finishing.

In another embodiment, said material, as described above, expanded or not, is pressed into granules.

In another preferred embodiment, said material, either or not in the shape of pressed granules, is dried with hot air of at least 90°C on a belt drier and then cooled down again to ambient temperature in a cooler.

A final moisture content of less than 10% is thereby typically obtained, and a typical free water content of 0.4 to 0.8 %, whereby the PDI (protein dispersibility index) is typically higher than 22%, with an antitrypsine value of less than 5500 T1U/mg, an urease value of some 0.02, and a free oil content of for example minimally 92%.

In another embodiment, the material obtained according to the invention is processed further into high-quality nutrients for certain animal species, for example into a fish flour substitute on a vegetable basis.

To this end, more docosahexaenoic acid (DHA); and/or inuline and/or wheat gluten; and/or amino acids; and/or enzymatic, pre-treated soy lumps and/or equivalent material is added in the required concentrations and mixtures according to conventional processes.

Such a high-quality fish flour on a vegetable basis is advantageous in that it lasts longer than the animal derivative, does not contain any contaminants or harmful trace elements, such as for example heavy metals or chlorinated hydrocarbons, and moreover has a high DHA (docosahexaenoic acid) value and a low EPA (eicosapentaenoic acid) value.

Moreover, in the above-described manner is obtained a fish flour substitute according to the invention which is very consistent as far as quality as well as price is concerned, with a maximal traceability of all the used raw materials which may be entirely based on non-genetically modified products.

In a further preferred embodiment, the end products are transformed into high-quality raw materials for the cosmetic industry.

The present invention is by no means restricted to the embodiment(s) described by way of example; on the contrary, such a method can be realised according to different variants while still remaining within the scope of the invention, but the invention is defined by the claims.

## Claims

1. Method for processing soybeans, **characterised in that** it comprises the following steps:
grinding or breaking full fat soybeans, combined with adjusting the water content to maximally 35 %ww, better still to maximally 30 %ww, even better yet to maximally 25 %ww;
processing them with at least one enzyme which is capable of converting the insoluble polysaccharides into soluble sugars;
and subsequently processing them with at least one enzyme which is capable of hydrolysing the proteins.

2. Method according to claim 1, **characterised in that** the different enzymes act in at least two consecutive steps.

3. Method according to any one of claims 1 to 2, **characterised in that** at least one enzyme is capable of converting oligosaccharides, in particular verbascose, raffinose and/or stachyose into soluble sugars.

4. Method according to any one of the preceding claims, **characterised in that** a first enzyme is alpha-galactosidase and a following one is papain.

5. Method according to any one of the preceding claims, **characterised in that** the papain is used in a concentration situated between 40-300 TU/mg, better still between 50-250 TU/mg, even better yet between 60 and 200 TU/mg.

6. Method according to claim 5, **characterised in that** the papain acts at a pressure of preferably 0.5 to 3 bar, better still of 0.8 to 2 bar, even better yet of 1 to 1.2 bar.

7. Method according to claim 4, **characterised in that** the papain is de-activated by exposing it to a temperature situated between 80 and 110°C, better still between 85° and 105°C; even better still between 90° and 100°C, for a duration of 45 to 60 minutes, better still of 30 to 45 minutes, even better still of 10 to 30 minutes.

8. Method according to claim 4, **characterised in that** the alpha-galactosidase is de-activated by exposing it to a temperature situated between 80 and 110°C, better still between 85° and 105°C, even better still between 90° and 100°C, for a duration of 45 to 60 minutes, better still of 30 to 45 minutes, even better of 10 to 30 minutes.

9. Method according to any one of the preceding claims, **characterised in that** DHA and/or inuline and/or wheat gluten and/or amino acids and/or enzymatically pre-treated soy lumps or equivalent products are added to the treated full fat soybeans.

10. Method according to any one of the preceding claims, **characterised in that** the end product is transformed into a surrogate fish flour on a vegetable basis.

11. Method according to any one of the preceding claims, **characterised in that** the end product is transformed into a cosmetic raw material.

## Patentansprüche

1. Verfahren zur Behandlung von Sojabohnen, **dadurch gekennzeichnet, dass** es die folgenden Schritte umfasst:
Mahlen oder Brechen vollfetter Sojabohnen, kombiniert mit dem Einstellen des Wassergehalts auf maximal 35 %ww, besser auf maximal 30 %ww, noch besser auf maximal 25 %ww;
deren Behandeln mit mindestens einem Enzym, das fähig ist, die unlöslichen Polysaccharide in lösliche Zucker umzuwandeln;
und nachfolgend deren Behandeln mit mindestens einem Enzym, das fähig ist, die Proteine zu hydrolysieren.

2. Verfahren nach Anspruch 1, **dadurch gekennzeichnet, dass** die verschiedenen Enzyme in mindestens zwei aufeinanderfolgenden Schritten einwirken.

3. Verfahren nach einem der Ansprüche 1 bis 2, **dadurch gekennzeichnet, dass** mindestens ein Enzym fähig ist, Oligosaccharide, insbesondere Verbascose, Raffinose und/oder Stachyose, in lösliche Zucker umzuwandeln.

4. Verfahren nach einem der vorgenannten Ansprüche, **dadurch gekennzeichnet, dass** ein erstes Enzym Alpha-Galactosidase ist und ein folgendes Papain ist.

5. Verfahren nach einem der vorgenannten Ansprüche, **dadurch gekennzeichnet, dass** das Papain in einer Konzentration verwendet wird, die zwischen 40-300 TU/mg, besser zwischen 50-250 TU/mg, noch besser zwischen 60 und 200 TU/mg liegt.

6. Verfahren nach Anspruch 5, **dadurch gekennzeichnet, dass** das Papain bei einem Druck von bevorzugt 0,5 bis 3 bar, besser von 0,8 bis 2 bar, noch besser von 1 bis 1,2 bar einwirkt.

7. Verfahren nach Anspruch 4, **dadurch gekennzeichnet, dass** das Papain deaktiviert wird, indem es einer Temperatur ausgesetzt wird, die zwischen 80 und 110°C, besser zwischen 85° und 105°C, noch besser zwischen 90° und 100°C liegt, für eine Dauer von 45 bis 60 Minuten, besser von 30 bis 45 Minuten, noch besser von 10 bis 30 Minuten.

8. Verfahren nach Anspruch 4, **dadurch gekennzeichnet, dass** die Alpha-Galactosidase deaktiviert wird, indem sie einer Temperatur ausgesetzt wird, die zwischen 80 und 110°C, besser zwischen 85° und 105°C, noch besser zwischen 90° und 100°C liegt, für eine Dauer von 45 bis 60 Minuten, besser von 30 bis 45 Minuten, noch besser von 10 bis 30 Minuten.

9. Verfahren nach einem der vorgenannten Ansprüche, **dadurch gekennzeichnet, dass** DHA und/oder Inulin und/oder Weizengluten und/oder Aminosäuren und/oder enzymatisch vorbehandelter Sojaschrot oder äquivalente Produkte den behandelten vollfetten Sojabohnen zugesetzt werden.

10. Verfahren nach einem der vorgenannten Ansprüche, **dadurch gekennzeichnet, dass** das Endprodukt zu einem Ersatz-Fischmehl auf pflanzlicher Basis umgewandelt wird.

11. Verfahren nach einem der vorgenannten Ansprüche, **dadurch gekennzeichnet, dass** das Endprodukt zu einem kosmetischen Rohmaterial umgewandelt wird.

## Revendications

1. Procédé pour traiter des fèves de soja, **caractérisé en ce qu'**il comprend les étapes suivantes consistant à :
broyer ou moudre des fèves de soja non dégraissées, en combinaison avec un réglage de la teneur en eau à une valeur maximale de 35 % en poids/poids, mieux à une valeur maximale de 30 % en poids/poids, encore mieux à une valeur maximale de 25 % en poids/poids ;
les traiter avec au moins une enzyme qui est capable de transformer les polysaccharides insolubles en sucres solubles ;
et les traiter ensuite avec au moins une enzyme qui est capable d'hydrolyser les protéines.

2. Procédé selon la revendication 1, **caractérisé en ce que** les différentes enzymes agissent dans au moins deux étapes successives.

3. Procédé selon l'une quelconque des revendications 1 à 2, **caractérisé en ce que** qu'au moins une enzyme est capable de transformer des oligosaccharides, en particulier le verbascose, le raffinose et/ou le stachyose en sucres solubles.

4. Procédé selon l'une quelconque des revendications précédentes, **caractérisé en ce que** la première enzyme est l'alpha-galactosidase et l'enzyme suivante est la papaïne.

5. Procédé selon l'une quelconque des revendications précédentes, **caractérisé en ce que** la papaïne est utilisée en une concentration qui se situe entre 40 et 300 TU/mg, mieux entre 50 et 250 TU/mg, encore mieux entre 60 et 200 TU/mg.

6. Procédé selon la revendication 5, **caractérisé en ce que** la papaïne agit sous une pression de préférence de 0,5 à 3 bars, mieux sous une pression de 0,8 à 2 bars, encore mieux sous une pression de 1 à 1,2 bar.

7. Procédé selon la revendication 4, **caractérisé en ce que** la papaïne est désactivée en l'exposant à une température située entre 80 et 110°C, mieux à une température entre 85 et 105°C encore mieux à une température entre 90 et 100 °C, pendant un laps de temps de 45 à 60 minutes, mieux de 30 à 45 minutes, encore mieux de 10 à 30 minutes.

8. Procédé selon la revendication 4, **caractérisé en ce que** l'alpha-galactosidase est désactivée en l'exposant à une température située entre 80 et 110°C, mieux à une température entre 85 et 105°C encore mieux à une température entre 90 et 100 °C, pendant un laps de temps de 45 à 60 minutes, mieux de 30 à 45 minutes, encore mieux de 10 à 30 minutes.

9. Procédé selon l'une quelconque des revendications précédentes, **caractérisé en ce qu'**on ajoute aux fèves de soja non dégraissées traitées de la DHA et/ou de l'inuline et/ou du gluten de froment et/ou des acides aminés et/ou des morceaux de soja soumis à un prétraitement enzymatique ou des produits équivalents.

10. Procédé selon l'une quelconque des revendications précédentes, **caractérisé en ce qu'**on transforme le produit final en une farine de poisson pour obtenir un produit succédané à base végétale.

11. Procédé selon l'une quelconque des revendications précédentes, **caractérisé en ce qu'**on transforme le produit final en une matière cosmétique de base.
